# EUROPÄISCHE PATENTSCHRIFT

(11) **EP 3 500 825 B1**
(45) Veröffentlichungstag und Bekanntmachung des Hinweises auf die Patenterteilung: **29.04.2020**
(21) Anmeldenummer: 17748488.8
(22) Anmeldetag: 03.08.2017
(51) Int. Cl.: G01D 5/14, B62D 15/02

(54) **SENSORSYSTEM UND VERFAHREN ZUR ERMITTLUNG EINES ABSOLUTEN DREHWINKELS EINER WELLE, UND FAHRZEUG MIT SOLCHEM SENSORSYSTEM**
SENSOR SYSTEM AND METHOD FOR DETERMINING THE ABSOLUTE ANGLE POSITION OF A SHAFT, AND VEHICLE WITH SUCH SENSOR SYSTEM
SYSTÈME DE CAPTEUR ET MÉTHODE POUR DÉTERMINER LA POSITION ANGULLAIRE ABSOLUE D'UN ARBRE, ET VÉHICULE AVEC UN TEL SYSTÈME DE CAPTEUR

(30) Priorität: 18.08.2016 DE 102016115310
(43) Veröffentlichungstag der Anmeldung: 26.06.2019
(73) Patentinhaber: Valeo Schalter und Sensoren GmbH, 74321 Bietigheim-Bissingen (DE)
(72) Erfinder: TANDJEU-TCHUISSI, Landry, 74321 Bietigheim-Bissingen (DE); INTINI, Onofrio, 74321 Bietigheim-Bissingen (DE)
(74) Vertreter: Pothmann, Karsten
(86) Internationale Anmeldenummer: PCT/EP2017/069691
(87) Internationale Veröffentlichungsnummer: WO 2018/033403

(56) Entgegenhaltungen:
- DE-A1-102009 031 176
- DE-U1-202009 016 539

## Beschreibung

Die Erfindung betrifft ein Sensorsystem zur Ermittlung eines absoluten Drehwinkels einer Welle mit einem Drehwinkelbereich von mehr als einer Umdrehung, insbesondere zur Ermittlung eines absoluten Lenkwinkels einer Lenkwelle in einem Fahrzeug mit einem Lenkwinkelbereich von mehr als einer Umdrehung, wobei das Sensorsystem einen drehsynchron mit der Welle verbindbaren Hauptrotor, einen mechanisch mit einer konstanten und gleichförmigen ersten Übersetzung mit dem Hauptrotor gekoppelten ersten Nebenrotor, einen mechanisch mit einer von der ersten Übersetzung verschiedenen, konstanten und gleichförmigen zweiten Übersetzung mit dem Hauptrotor gekoppelten zweiten Nebenrotor, eine dem ersten Nebenrotor zugeordnete erste Sensoreinrichtung zur Erzeugung eines von einem Drehwinkel des ersten Nebenrotors abhängigen ersten Sensorsignals, eine dem zweiten Nebenrotor zugeordnete zweite Sensoreinrichtung zur Erzeugung eines von einem Drehwinkel des zweiten Nebenrotors abhängigen zweiten Sensorsignals, eine dem Hauptrotor zugeordnete dritte Sensoreinrichtung zur Erzeugung eines von einem relativen Drehwinkel des Hauptrotors abhängigen dritten Sensorsignals und eine Auswerteeinrichtung zur Ermittlung des absoluten Drehwinkels des Hauptrotors aus den Sensorsignalen der Sensoreinrichtungen aufweist. Ferner betrifft die Erfindung ein Verfahren zur Ermittlung eines absoluten Drehwinkels einer Welle mit einem vorbeschriebenen Sensorsystem sowie ein Fahrzeug mit einem solchen Sensorsystem.

Gattungsgemäße Sensorsysteme, welche zur Ermittlung eines absoluten Drehwinkels einer Welle einen drehsynchron mit der Welle verbindbaren Hauptrotor, einen mechanisch mit einer konstanten und gleichförmigen ersten Übersetzung mit dem Hauptrotor gekoppelten ersten Nebenrotor, einen mechanisch mit einer von der ersten Übersetzung verschiedenen, konstanten und gleichförmigen zweiten Übersetzung mit dem Hauptrotor gekoppelten zweiten Nebenrotor, eine dem ersten Nebenrotor zugeordnete erste Sensoreinrichtung zur Erzeugung eines von einem Drehwinkel des ersten Nebenrotors abhängigen ersten Sensorsignals, eine dem zweiten Nebenrotor zugeordnete zweite Sensoreinrichtung zur Erzeugung eines von dem von einem Drehwinkel des zweiten Nebenrotors abhängigen zweiten Sensorsignals, und eine Auswerteeinrichtung zur Ermittlung des absoluten Drehwinkels des Hauptrotors aus den Sensorsignalen der ersten und zweiten Sensoreinrichtung aufweisen, sind aus dem Stand der Technik grundsätzlich bekannt, beispielsweise aus der DE 195 06 938 A1 oder der DE 10 2009 031 176 A1. Mithilfe der ersten Sensoreinrichtung und der zweiten Sensoreinrichtung, kann der absolute Drehwinkel des Hauptrotors bestimmt werden.

Zugehörige Verfahren zur Ermittlung des absoluten Drehwinkels der Welle mit einem solchen Sensorsystem sind ebenfalls grundsätzlich bekannt, beispielsweise aus der erstgenannten DE 195 06 938 A1 oder der DE 101 10 785 A1, auf die insbesondere für nähere Ausführungen in Bezug auf die Ermittlung des absoluten Drehwinkels der Welle verwiesen wird.

Zur Verbesserung der Genauigkeit bei der Ermittlung des absoluten Drehwinkels der Welle ist bei dem in der DE 10 2009 031 176 A1 beschriebenen Sensorsystem zusätzlich noch eine dritte Sensoreinrichtung vorgesehen, welche dazu ausgebildet ist, den relativen Drehwinkel des Hauptrotors hochauflösend zu erfassen. Mittels der ersten Sensoreinrichtung und der zweiten Sensoreinrichtung lässt sich der absolute Drehwinkel der Welle mit einer ersten Genauigkeit bestimmen, insbesondere, in welchem Drehwinkelbereich sich der Hauptrotor befindet. Mittels der dritten, hochauflösenden Sensoreinrichtung kann der relative Drehwinkel des Hauptrotors innerhalb dieses Drehwinkelbereichs mit einer zweiten, besseren Genauigkeit bestimmt werden, so dass der absolute Drehwinkel im Ergebnis mit einer verbesserten Genauigkeit ermittelt werden kann.

Dazu weist die dritte Sensoreinrichtung einen zwischen den beiden Nebenrotoren auf einer gemeinsamen Leiterplatte ortsfest gegenüber dem Hauptrotor angeordneten Magnetsensor sowie einem am Hauptrotor angeordneten und über den gesamten Umfang ausgebildeten Magnetring auf, der aus in Umfangsrichtung abwechselnd angeordneten magnetischen Nord-und Südpolen zusammengesetzt ist, die bei einer Drehung des Hauptrotors am Magnetsensor vorbeigeführt werden. Dabei bilden ein Nordpol und ein benachbarter Südpol jeweils ein Polpaar. Aus der vom Magnetsensor erfassten Flussdichte oder der erfassten Feldrichtung kann der relative Drehwinkel des Hauptrotors innerhalb eines Drehwinkelbereichs bestimmt werden.

Mit einem solchen Sensorsystem kann zwar der absolute Drehwinkel einer Welle mit einer hohen Genauigkeit bestimmt werden. Ein solches Sensorsystem, insbesondere die vorbeschriebene dritte Sensoreinrichtung, ist jedoch aufwendig in der Herstellung und damit kostenintensiv.

Ferner kann es, insbesondere wenn die erste Sensoreinrichtung und die zweite Sensoreinrichtung ebenfalls als magnetische Sensoreinrichtungen ausgebildet sind, zu einer wechselseitigen Beeinflussung der Sensoreinrichtungen untereinander kommen, insbesondere kann der Magnetring der dritten Sensoreinrichtung das Sensorsignal der ersten Sensoreinrichtung und/oder der zweiten Sensoreinrichtung verfälschen, wodurch Messfehler bzw. Ungenauigkeiten entstehen können, die sich negativ auf die erreichbare Genauigkeit bei der Ermittlung des absoluten Drehwinkels auswirken können. Ferner können die Magnete der ersten Sensoreinrichtung und/oder der zweiten Sensoreinrichtung das dritte Sensorsignal verfälschen.

Es ist daher eine Aufgabe der Erfindung, ein alternatives Sensorsystem bereitzustellen, vorzugsweise ein kostengünstigeres Sensorsystem und insbesondere ein Sensorsystem, mit dem die wechselseitige Beeinflussung der einzelnen Sensoreinrichtungen untereinander reduziert werden kann, sowie ein zugehöriges Verfahren zur Ermittlung des absoluten Drehwinkels der Welle mit einem solchen Sensorsystem.

Diese Aufgabe wird erfindungsgemäß durch ein Sensorsystem, durch ein Verfahren und durch ein Fahrzeug gemäß den jeweiligen unabhängigen Patentansprüchen gelöst. Vorteilhafte Ausführungen der Erfindung sind Gegenstand der abhängigen Patentansprüche, der Beschreibung und der Figuren und werden im Folgenden näher erläutert.

Ein erfindungsgemäßes Sensorsystem ist dadurch gekennzeichnet, dass die dritte Sensoreinrichtung einen Detektionsbereich aufweist, der kleiner als 360° ist. D.h., der Detektionsbereich der dritten Sensoreinrichtung ist bei einem erfindungsgemäßen Sensorsystem kleiner als eine volle Umdrehung. Damit erstreckt sich der Drehwinkelbereich, in dem mittels der dritten Sensoreinrichtung in Abhängigkeit vom relativen Drehwinkel des Hauptrotors das dritte Sensorsignal erzeugt werden kann, nicht über eine volle Umdrehung, sondern nur über einen definierten Winkelbereich. Insbesondere kann mittels der dritten Sensoreinrichtung nur in diesem Winkelbereich, dem sogenannten Detektionsbereich, der relative Drehwinkel des Hauptrotors erfasst werden.

Vorzugsweise ist ein erfindungsgemäßes Sensorsystem dazu ausgebildet, den absoluten Drehwinkel der Welle in beide Drehrichtungen zu erfassen, d.h. sowohl nach links als auch nach rechts, d.h. es gilt vorzugsweise: α ≤ ± 360°/q mit q > 1.

Dadurch, dass die dritte Sensoreinrichtung einen Detektionsbereich aufweist, der sich nicht über eine volle Umdrehung in Umfangsrichtung erstreckt, sondern nur über einen Teil davon, ist eine erfindungsgemäßes Sensorsystem gegenüber einem Sensorsystem mit einer dritten Sensoreinrichtung mit einem Detektionsbereich von 360°, wie es beispielsweise in der DE 10 2009 031 176 A1 beschrieben ist, kostengünstiger, da insbesondere die dritte Sensoreinrichtung einfacher ausgestaltet werden kann und damit auch in der Herstellung einfacher und kostengünstiger wird.

Mit einem erfindungsgemäßen Sensorsystem kann der absolute Drehwinkel der Welle zwar nur innerhalb des Detektionsbereichs mit einer erhöhten Genauigkeit bestimmt werden. Da die erhöhte Genauigkeit erfahrungsgemäß jedoch in der Regel nicht über den gesamten Drehwinkelbereich bzw. eine volle Umdrehung erforderlich ist, sondern nur in einem definierten Drehwinkelbereich - beispielsweise ist in Fahrzeugen bei der Bestimmung des absoluten Lenkwinkels einer Lenkwelle die erhöhte Genauigkeit typischerweise nur um die Nulllage herum erforderlich - kann in vielen Anwendungsfällen, insbesondere bei einer vorteilhaften Anordnung der dritten Sensoreinrichtung innerhalb des Sensorsystems, ein erfindungsgemäßes Sensorsystem ohne nennenswerte Nachteile eingesetzt werden.

Im Sinne der Erfindung wird unter dem absoluten Drehwinkel einer Welle dabei der Winkel verstanden, um den die Welle ausgehend von einer definierten Nulllage verdreht ist, wobei der absolute Drehwinkel der Welle > 360° sein kann.

Der relativen Drehwinkel der Welle ist im Sinne der Erfindung der Drehwinkel der Welle innerhalb einer Umdrehung, d.h. der relative Drehwinkel kann maximal 360° betragen. Beträgt der absolute Drehwinkel der Welle beispielsweise +400°, beträgt der relative Drehwinkel der Welle +40°. Entsprechend beträgt der relative Drehwinkel -100°bei einem absoluten Drehwinkel von - 460°.

Eine drehsynchrone Verbindung zwischen zwei drehbar gelagerten Bauteilen ist eine Verbindung, bei der eine Verdrehung des ersten Bauteils um einen definierten Drehwinkel eine Verdrehung des zweiten Bauteils um den gleichen Drehwinkel bewirkt und umgekehrt. D.h., ist der Hauptrotor drehsynchron mit der Welle verbunden, entspricht der absolute Drehwinkel des Hauptrotors dem absoluten Drehwinkel der Welle und umgekehrt. Vorzugsweise kann der Hauptrotor zur Herstellung einer drehsynchronen Verbindung mit der Welle drehfest mit der Welle verbunden werden, insbesondere spielfrei in Umfangsrichtung.

Ein Rotor im Sinne der Erfindung ist ein um einen Drehwinkel verdrehbar gelagerter Körper, wobei vorzugsweise wenigstens ein Rotor des Sensorsystems, d.h. wenigstens der Hauptrotor und/oder der erste Nebenrotor und/oder der zweite Nebenrotor, als scheibenförmiger Drehkörper ausgebildet ist, beispielsweise als eine drehbar gelagerte Scheibe, insbesondere als Reibrad, Zahnrad, Seilscheibe oder dergleichen.

Als Hauptrotor wird dabei der drehbare Körper des Sensorsystems bezeichnet, welcher dazu ausgebildet bzw. vorgesehen ist, drehsynchron mit der Welle, deren Drehwinkel mittels des erfindungsgemäßen Sensorsystems erfasst werden soll, verbunden zu werden. Als Nebenrotoren werden die drehbaren gelagerten Körper des Sensorsystems bezeichnet, welche mechanisch mit einer Übersetzung mit dem Hauptrotor gekoppelt sind.

Vorzugsweise bildet bei einem erfindungsgemäßen Sensorsystem der Hauptrotor mit dem ersten Nebenrotor und dem zweiten Nebenrotor (jeweils) ein Getriebe. Als geeignet haben sich in diesem Fall insbesondere Reibradgetriebe, Zahnradgetriebe und Zugmittelgetriebe erwiesen. D.h., der Hauptrotor ist vorzugsweise mittels eines Reibradgetriebes, eines Zahnradgetriebes und/oder eines Zugmittelgetriebes mechanisch mit einer konstanten und gleichförmigen ersten Übersetzung mit dem ersten Nebenrotor gekoppelt und vorzugsweise mittels eines Reibradgetriebes, eines Zahnradgetriebes und/oder eines Zugmittelgetriebes mit einer von der ersten verschiedenen, aber ebenfalls konstanten und gleichförmigen zweiten Übersetzung mechanisch mit dem zweiten Nebenrotor gekoppelt.

Zahnradgetriebe haben sich dabei als besonders vorteilhaft herausgestellt, so dass vorzugsweise der Hauptrotor sowie der erste Nebenrotor und der zweite Nebenrotor jeweils als Zahnräder ausgebildet sind, wobei der Hauptrotor jeweils mit dem ersten Nebenrotor und dem zweiten Nebenrotor kämmt und der erste Nebenrotor und der zweite Nebenrotor unterschiedliche Zähneanzahlen aufweisen, so dass der erste Nebenrotor mit einer konstanten und gleichförmigen ersten Übersetzung mit dem Hauptrotor gekoppelt ist und der zweite Nebenrotor mit einer zweiten, von der ersten Übersetzung verschiedenen, konstanten und gleichförmigen Übersetzung.

Vorzugsweise ist der Hauptrotor dazu ausgebildet, unmittelbar auf der Welle angeordnet zu werden, wobei der Hauptrotor besonders bevorzugt drehfest und in Umfangsrichtung spielfrei mit der Welle verbunden werden kann. Dies ermöglicht eine nahezu hysteresefreie Ermittlung des relativen Drehwinkels des Hauptrotors, so dass bei entsprechend hoher Auflösung der dritten Sensoreinrichtung im Detektionsbereich der absolute Drehwinkel des Hauptrotors bzw. der absolute Drehwinkel der drehsynchron mit diesem verbundenen Welle innerhalb des Detektionsbereichs mit einer hohen Genauigkeit nahezu hysteresefrei ermittelt werden kann.

In einer vorteilhaften Ausgestaltung eines erfindungsgemäßen Sensorsystems ist das Sensorsystem dazu ausgebildet, den absoluten Drehwinkel des Hauptrotors mit einer ersten Genauigkeit zu ermitteln, wenn der relative Drehwinkel des Hauptrotors außerhalb des Detektionsbereichs der dritten Sensoreinrichtung liegt, und mit einer zweiten, vorzugsweise besseren Genauigkeit, wenn der relative Drehwinkel des Hauptrotors innerhalb des Detektionsbereichs der dritten Sensoreinrichtung liegt.

Vorzugsweise ist die Auflösung der dritten Sensoreinrichtung dazu wenigstens so hoch, wie die Auflösung des nur aus mittels der ersten Sensoreinrichtung und/oder der zweiten Sensoreinrichtung ermittelten absoluten Drehwinkels des Hauptrotors, vorzugsweise wenigstens doppelt so hoch wie diese, insbesondere wenigstens viermal so hoch wie diese. Besonders bevorzugt beträgt die Auflösung der dritten Sensoreinrichtung wenigstens die zehnfache Auflösung der Auflösung, mit welcher der absolute Drehwinkel ohne Berücksichtigung des dritten Sensorsignals aus dem ersten Sensorsignal und/oder dem zweiten Sensorsignal ermittelbar ist.

Ein erfindungsgemäßes Sensorsystem mit einer dritten Sensoreinrichtung, die einen Detektionsbereich von kleiner als 360° aufweist, hat ferner den Vorteil, dass bei geschickter Anordnung der dritten Sensoreinrichtung, insbesondere deren Detektionsbereichs, eine wechselseitige Beeinflussung zwischen der dritten Sensoreinrichtung und der ersten Sensoreinrichtung und/oder der zweiten Sensoreinrichtung reduziert oder sogar vollständig vermieden werden kann. Dazu ist in einer weiteren vorteilhaften Ausgestaltung eines erfindungsgemäßen Sensorsystems die dritte Sensoreinrichtung derart ausgebildet und relativ zur ersten Sensoreinrichtung und/oder zur zweiten Sensoreinrichtung angeordnet, dass zumindest um einen definierten relativen Drehwinkel des Hauptrotors herum, vorzugsweise um eine relative Nulllage des Hauptrotors herum, eine wechselseitige Beeinflussung zwischen der dritten Sensoreinrichtung und ersten Sensoreinrichtung und/oder der zweiten Sensoreinrichtung reduziert oder sogar vermieden wird, insbesondere während der Erzeugung des dritten Sensorsignals. D.h. mit anderen Worten, dass die dritte Sensoreinrichtung vorzugsweise derart ausgebildet und relativ zur ersten Sensoreinrichtung und/oder zur zweiten Sensoreinrichtung angeordnet ist, dass, wenn der Hauptrotor einen Drehwinkel aufweist, der im Detektionsbereich der dritten Sensoreinrichtung liegt, keine oder nur eine reduzierte wechselseitige Beeinflussung zwischen der dritten Sensoreinrichtung mit der ersten Sensoreinrichtung und/oder der zweiten Sensoreinrichtung auftritt.

Darüber hinaus ergibt sich durch den sich nicht über eine volle Umdrehung erstreckenden Detektionsbereich der dritten Sensoreinrichtung eine zusätzliche Möglichkeit zur Plausibilisierung der Sensorsignale, welche später, insbesondere im Zusammenhang mit einem erfindungsgemäßen Verfahren, näher beschrieben wird.

In einer weiteren vorteilhaften Ausgestaltung eines erfindungsgemäßen Sensorsystems fällt eine absolute Nulllage des Hauptrotors mit der relativen Nulllage des Hauptrotors zusammen. Unter der absoluten Nulllage des Hauptrotors wird dabei die Drehwinkelposition verstanden, in welcher der Hauptrotor einen absoluten Drehwinkel von 0° aufweist. Unter der relativen Nulllage im Sinne der Erfindung wird dementsprechend die Drehwinkelposition verstanden, in welcher der Hauptrotor einen relativen Drehwinkel von 0° aufweist. D.h., wenn der absolute Drehwinkel des Hauptrotors 0° beträgt, beträgt der relative Drehwinkel des Hauptrotors vorzugsweise ebenfalls 0°.

In einer weiteren vorteilhaften Ausgestaltung eines erfindungsgemäßen Sensorsystems erstreckt sich der Detektionsbereich der dritten Sensoreinrichtung um einen definierten, relativen Drehwinkel des Hauptrotors herum, vorzugsweise um die relative Nulllage des Hauptrotors, wobei sich der Detektionsbereich insbesondere symmetrisch um den definierten relativen Drehwinkel des Hauptrotors erstreckt.

Vorzugsweise erstreckt sich der Detektionsbereich der dritten Sensoreinrichtung eines erfindungsgemäßen Sensorsystems dabei über einen Drehwinkelbereich von ≤ 270°, wobei der Detektionsbereich vorzugsweise innerhalb des Drehwinkelbereichs von +135° bis -135°liegt, bezogen auf den relativen Drehwink el des Hauptrotors.

In einer weiteren vorteilhaften Ausgestaltung eines erfindungsgemäßen Sensorsystems erstreckt sich der Detektionsbereich der dritten Sensoreinrichtung über einen Drehwinkelbereich von 180°, vorzugsweise von +90° b is -90°, bezogen auf den relativen Drehwinkel des Hauptrotors.

In einer weiteren vorteilhaften Ausgestaltung eines erfindungsgemäßen Sensorsystems erstreckt sich der Detektionsbereich der dritten Sensoreinrichtung über einen Drehwinkelbereich von ≤ 150° und liegt vorzugsweise innerhalb des Drehwink elbereichs von +70°bis -75°, bezogen auf den relativen Drehwi nkel des Hauptrotors.

In einer weiteren vorteilhaften Ausgestaltung eines erfindungsgemäßen Sensorsystems ist die dritte Sensoreinrichtung eine magnetische Sensoreinrichtung, wobei die dritte Sensoreinrichtung zur Erzeugung des dritten Sensorsignals vorzugsweise einen Magnetsensor sowie ein sich in Umfangsrichtung erstreckendes Magnetringsegment aufweist, wobei ein Winkelbereich, über den sich das Magnetringsegment in Umfangsrichtung erstreckt, insbesondere den Detektionsbereich definiert. Selbstverständlich kann die dritte Sensoreinrichtung auch eine optische Sensoreinrichtung oder eine sonstige, insbesondere aus dem Stand der Technik bekannte und für diesen Einsatzzweck geeignete Sensoreinrichtung sein.

Die zur Erzeugung eines vom Drehwinkel des ersten Nebenrotors abhängigen, ersten Sensorsignals vorgesehene, erste Sensoreinrichtung ist vorzugsweise ebenfalls eine magnetische Sensoreinrichtung. Die erste Sensoreinrichtung kann aber auch eine optische Sensoreinrichtung oder eine sonstige, aus dem Stand der Technik bekannte und für diesen Einsatzzweck geeignete Sensoreinrichtung sein. Entsprechend ist die zweite Sensoreinrichtung ebenfalls vorzugsweise eine optische Sensoreinrichtung, eine magnetische Sensoreinrichtung oder als eine sonstige, für diesen Einsatzzweck geeignete, insbesondere aus dem Stand der Technik bekannte Sensoreinrichtung.

In einer weiteren vorteilhaften Ausgestaltung eines erfindungsgemäßen Sensorsystems ist der Magnetsensor der dritten Sensoreinrichtung ortsfest im Sensorsystem angeordnet und das Magnetringsegment am Hauptrotor befestigt. In einigen Fällen kann es hingegen vorteilhaft sein, den Magnetsensor am Hauptrotor zu befestigen und das Magnetringsegment ortsfest im Sensorsystem anzuordnen. Die Komponenten der dritten Sensoreinrichtung, insbesondere der Magnetsensor und der Magnetsegmentring, sind dabei vorzugsweise derart ausgebildet und im Sensorsystem angeordnet, dass das dritte Sensorsignal erzeugt wird, wenn der relative Drehwinkel des Hauptrotors innerhalb des Detektionsbereichs der dritten Sensoreinrichtung liegt und kein drittes Sensorsignal erzeugt wird, wenn der relative Drehwinkel des Hauptrotors außerhalb des Detektionsbereichs der dritten Sensoreinrichtung liegt.

In einer weiteren vorteilhaften Ausgestaltung eines erfindungsgemäßen Sensorsystems ist das Magnetringsegment aus mehreren, in Umfangsrichtung aneinandergereihten Polpaaren zusammengesetzt, wobei die Polpaare vorzugsweise derart aneinandergereiht sind, dass das Magnetringsegment abwechselnd nebeneinander angeordnete Nordpole und Südpole aufweist, wobei die Polpaare insbesondere als Permanentmagnet-Polpaare ausgebildet sind.

In einer weiteren vorteilhaften Ausgestaltung eines erfindungsgemäßen Sensorsystems erstrecken sich alle Polpaare jeweils über einen gleichen Polpaar-Winkelbereich, wobei der Polpaar-Winkelbereich vorzugsweise etwa einer doppelten Genauigkeit entspricht, mit welcher der absolute Drehwinkel aus dem ersten Sensorsignal und dem zweiten Sensorsignal ermittelbar ist.

In einer weiteren vorteilhaften Ausgestaltung eines erfindungsgemäßen Sensorsystems ist der Magnetsensor der dritten Sensoreinrichtung im Bereich der relativen Nulllage des Hauptrotors ortsfest im Sensorsystem angeordnet und der Winkelbereich, über den sich das Magnetringsegment der dritten Sensoreinrichtung erstreckt und der den Detektionsbereich definiert, ist wenigstens so klein gewählt, dass eine Beeinflussung der ersten Sensoreinrichtung und/oder der zweiten Sensoreinrichtung durch das Magnetringsegment der dritten Sensoreinrichtung und/oder umgekehrt zumindest um die relative Nulllage des Hauptrotors herum vermieden wird, vorzugsweise über den gesamten Detektionsbereich der dritten Sensoreinrichtung.

Vorzugsweise sind die erste Sensoreinrichtung und/oder die zweite Sensoreinrichtung derart weit beabstandet vom Magnetsensor der dritten Sensoreinrichtung angeordnet, dass während durch das Vorbeiführen des Magnetringsegments am Magnetsensor das dritte Sensorsignal erzeugt wird, eine unerwünschte, wechselseitige Beeinflussung vermieden wird, insbesondere eine Beeinflussung der ersten Sensoreinrichtung und/oder der zweiten Sensoreinrichtung auf die dritte Sensoreinrichtung und umgekehrt.

Es hat sich als vorteilhaft herausgestellt, wenn der Magnetsensor der dritten Sensoreinrichtung in einem Bereich um die relative Nulllage des Hauptrotors angeordnet ist, insbesondere in der relativen Nulllage des Hauptrotors, der Detektionsbereich der dritten Sensoreinrichtung innerhalb des Drehwinkelbereichs von +90° bis -90° liegt, bezogen auf den relativen Drehwinkel des Hauptrotors, und die erste Sensoreinrichtung und die zweite Sensoreinrichtung jeweils in radialer Richtung außerhalb eines Drehwinkelbereichs von ±90° bis ±180° angeordnet sind, vorzugsweise außerhalb eines Drehwinkelbereichs von ±120° bis ±180° insbesondere außerhalb eines Drehwinkelbereichs von ±135°bis ±180°.

Ein erfindungsgemäßes Verfahren ist gekennzeichnet durch die Schritte:
- Erfassen der von den Sensoreinrichtungen erzeugten Sensorsignale und
- Ermitteln des absoluten Drehwinkels des Hauptrotors aus den erfassten Sensorsignalen,
wobei der absolute Drehwinkel des Hauptrotors aus dem ersten Sensorsignal und/oder dem zweiten Sensorsignal ermittelt wird, wenn der relative Drehwinkel des Hauptrotors außerhalb des Detektionsbereichs der dritten Sensoreinrichtung liegt, und wobei der absolute Drehwinkel aus dem ersten Sensorsignal und/oder dem zweiten Sensorsignal und dem dritten Sensorsignal ermittelt wird, wenn der relative Drehwinkel des Hauptrotors innerhalb des Detektionsbereichs der dritten Sensoreinrichtung liegt.

D.h. mit anderen Worten, dass erfindungsgemäß, wenn der Hauptrotor derart um einen Drehwinkel verdreht ist, dass der relative Drehwinkel innerhalb des Detektionsbereichs liegt und mittels der dritten Sensoreinrichtung das dritte Sensorsignal erzeugt wird, zur Ermittlung des absoluten Drehwinkels des Hauptrotors das erste Sensorsignal, das zweite Sensorsignal und das dritte Sensorsignal herangezogen werden und, wenn der relative Drehwinkel des Hauptrotors außerhalb des Detektionsbereichs liegt und daher kein drittes Sensorsignal erzeugt wird, nur das erste Sensorsignal und das zweite Sensorsignal zur Ermittlung des absoluten Drehwinkels herangezogen werden.

Bei entsprechender Ausgestaltung der dritten Sensoreinrichtung, insbesondere wenn die dritte Sensoreinrichtung über eine entsprechend hohe Auflösung verfügt, kann auf diese Weise der absolute Drehwinkel innerhalb des Detektionsbereichs mit einer hohen Genauigkeit ermittelt werden und außerhalb des Detektionsbereichs mit einer geringeren Genauigkeit. Da in den meisten Fällen jedoch nur innerhalb eines bestimmten Drehwinkelbereichs, insbesondere um die absolute Nulllage der Welle bzw. des Hauptrotors herum, eine hohe Genauigkeit erforderlich ist, kann mit einem erfindungsgemäßen Verfahren, insbesondere zusammen mit einem erfindungsgemäßen Sensorsystem, auf eine besonders einfache und kostengünstige Art und Weise, in einem relevanten Drehwinkelbereich der absolute Drehwinkel einer Welle mit einer hohen Auflösung nahezu hysteresefrei ermittelt werden, in vielen Anwendungsfällen sogar ohne nennenswerte Funktionseinbußen.

Entsprechend wird in einer vorteilhaften Ausgestaltung eines erfindungsgemäßen Verfahrens der absolute Drehwinkel des Hauptrotors mit einer ersten Genauigkeit ermittelt, wenn der relative Drehwinkel des Hauptrotors außerhalb des Detektionsbereichs der dritten Sensoreinrichtung liegt und mit einer zweiten Genauigkeit, vorzugsweise mit einer besseren Genauigkeit, wenn der relative Drehwinkel des Hauptrotors innerhalb des Detektionsbereichs der dritten Sensoreinrichtung liegt.

In einer weiteren vorteilhaften Ausgestaltung eines erfindungsgemäßen Verfahrens wird zusätzlich eine Plausibilisierung der Sensorsignale durchgeführt, wobei die Plausibilisierung vorzugsweise die Schritte umfasst:
- Ermitteln des absoluten Drehwinkels des Hauptrotors mit einer ersten Genauigkeit aus dem ersten Sensorsignal und/oder dem zweiten Sensorsignal,
- Prüfen, ob der absolute Drehwinkel des Hauptrotors innerhalb oder außerhalb eines definierten Drehwinkelbereichs liegt, wobei der definierte Drehwinkelbereich insbesondere dem Detektionsbereich entspricht,
- Prüfen, ob mittels der dritten Sensoreinrichtung in Abhängigkeit des zugehörigen, relativen Drehwinkels des Hauptrotors das dritte Sensorsignal erzeugt wurde oder nicht,
- Prüfen, ob ein Fehlerzustand vorliegt oder nicht, und
- ggf. Ausgeben eines Fehlerzustandssignals.

In Abhängigkeit des Signalwerts des Fehlerzustandssignals können dann entsprechende Maßnahmen getroffen werden, um das System, welches mit dem erfindungsgemäßen Verfahren überwacht wird, beispielsweise ein Fahrzeug, vorzugsweise in Verbindung mit einem erfindungsgemäßen Sensorsystem, in einen sicheren Zustand zu überführen.

In einer weiteren vorteilhaften Ausgestaltung eines erfindungsgemäßen Verfahrens liegt ein Fehlerzustand vor, falls der ermittelte, absolute Drehwinkel des Hauptrotors innerhalb des Detektionsbereichs der dritten Sensoreinrichtung liegt und kein drittes Sensorsignal erzeugt worden ist, oder falls der ermittelte, absolute Drehwinkel des Hauptrotors außerhalb des Detektionsbereichs der dritten Sensoreinrichtung liegt und ein drittes Sensorsignal erzeugt worden ist.

Ein erfindungsgemäßes Fahrzeug ist dadurch gekennzeichnet, dass es ein erfindungsgemäßes Sensorsystem aufweist, wobei der Hauptrotor drehsynchron mit der Welle verbunden ist, so dass der absolute Drehwinkel des Hauptrotors dem Drehwinkel der Welle entspricht.

Die mit Bezug auf das Sensorsystem vorgestellten, vorteilhaften Ausgestaltungen und deren Vorteile gelten entsprechend auch für ein erfindungsgemäßes Verfahren sowie für ein erfindungsgemäßes Fahrzeug mit einem erfindungsgemäßen Sensorsystem.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgenden in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, sofern sie technisch sinnvoll sind.

Die Erfindung wird nun anhand eines vorteilhaften Ausführungsbeispiels unter Bezugnahme auf die beigefügten Zeichnungen näher erläutert.

Es zeigen:
- Fig. 1: in schematischer Darstellung den prinzipiellen Aufbau eines ersten Ausführungsbeispiels eines erfindungsgemäßen Sensorsystems zur Ermittlung eines absoluten Lenkwinkels einer Lenkwelle,
- Fig. 2a: den Signalverlauf des ersten Sensorsignals und des zweiten Sensorsignals über dem absoluten Lenkwinkel und
- Fig. 2b: den Signalverlauf des dritten Sensorsignals über dem absoluten Lenkwinkel.

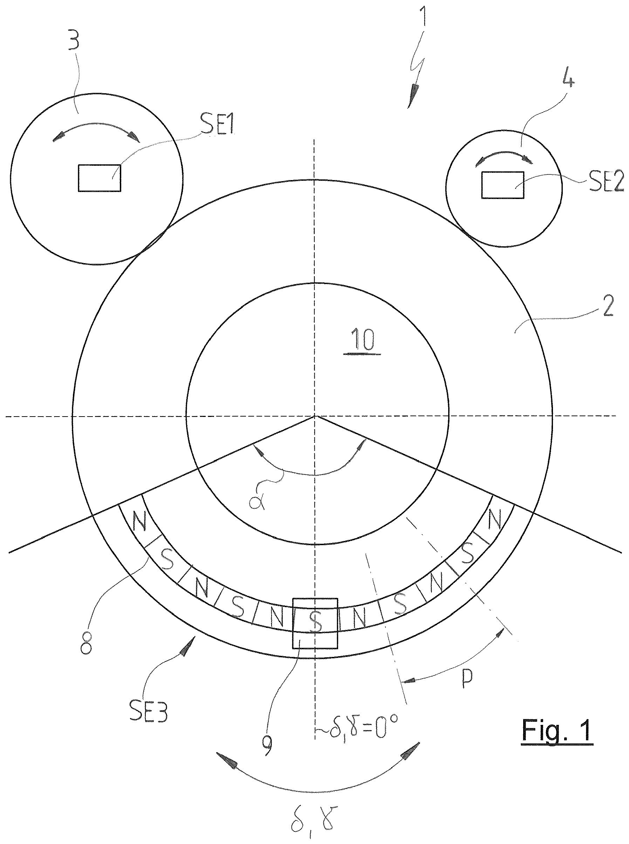

Fig. 1 zeigt in schematischer Darstellung den prinzipiellen Aufbau eines ersten Ausführungsbeispiels eines erfindungsgemäßen Sensorsystems 1 zur Ermittlung eines absoluten Lenkwinkels δ einer Lenkwelle 10.

Das erfindungsgemäßes Sensorsystem 1 weist dabei einen drehfest und in Umfangsrichtung spielfrei mit der Lenkwelle 10 verbundenen Hauptrotor 2 sowie einen ersten Nebenrotor 3 und einen zweiten Nebenrotor 4 auf. Der Hauptrotor 2 sowie der erste Nebenrotor 3 und der zweite Nebenrotor 4 sind dabei jeweils als um hier nicht näher bezeichnete Achsen drehbar gelagerte Zahnräder 2, 3, 4 ausgebildet.

Der Hauptrotor 2 ist aufgrund seiner drehfesten, in Umfangsrichtung spielfreien Verbindung mit der Lenkwelle 10 dabei drehsynchron mit der Lenkwelle 10 verbunden, so dass eine Verdrehung der Lenkwelle 10 um einen definierten, absoluten Drehwinkel δ eine Verdrehung des Hauptrotors 2 um den gleichen, definierten, absoluten Drehwinkel δ bewirkt.

Der erste Nebenrotor 3 und der zweite Nebenrotor 4 bilden dabei jeweils mit dem Hauptrotor 2 ein Zahnradgetriebe, wobei der Nebenrotor 3 mit dem Hauptrotor 2 mechanisch mit einer konstanten und gleichförmigen ersten Übersetzung mit dem Hauptrotor 2 gekoppelt ist und der zweite Nebenrotor 4 mit einer von der ersten Übersetzung verschiedenen, aber ebenfalls konstanten und gleichförmigen zweiten Übersetzung. Dazu weist der zweite Nebenrotor 4 eine vom ersten Nebenrotor 3 abweichende Zähnezahl auf.

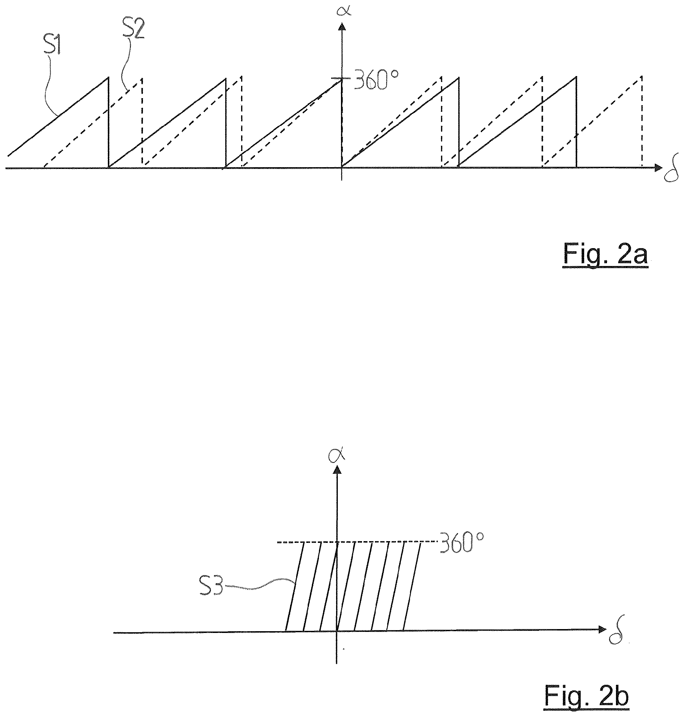

Zur Erzeugung eines von einem Drehwinkel des ersten Nebenrotors 3 abhängigen ersten Sensorsignals S1 (siehe Fig. 2a) weist das erfindungsgemäßen Sensorsystem 1 eine ersten Sensoreinrichtung SE1 auf sowie eine zweite Sensoreinrichtung SE2 zur Erzeugung eines von einem Drehwinkel des zweiten Nebenrotors 4 abhängigen, zweiten Sensorsignals S2.

Ferner weist das erfindungsgemäße Sensorsystem 1 eine dritte Sensoreinrichtung SE3 auf, die zur Erzeugung eines dritten Sensorsignals S3 (siehe Fig. 2b) in Abhängigkeit von einem relativen Drehwinkel γ des Hauptrotors 2 ausgebildet ist.

Des Weiteren weist das erfindungsgemäße Sensorsystem 1 eine hier nicht dargestellte Auswerteeinrichtung zur Ermittlung des absoluten Drehwinkels δ des Hauptrotors 2 bzw. der mit diesem drehsynchron verbundenen Lenkwelle 10 aus den Sensorsignalen S1, S2, S3 der Sensoreinrichtungen SE1, SE2, SE3 auf.

Alle drei Sensoreinrichtungen SE1, SE2 und SE3 sind bei diesem Ausführungsbeispiel eines erfindungsgemäßen Sensorsystems 1 dabei als magnetische Sensoreinrichtungen SE1, SE2 und SE3 ausgebildet, wobei die erste Sensoreinrichtung SE1 und die zweite Sensoreinrichtung SE2 jeweils dazu ausgebildet sind, den Drehwinkel des zugehörigen Nebenrotor 3 bzw. 4 jeweils wenigstens über eine volle Umdrehung zu erfassen, d.h. wenigstens über einen Drehwinkelbereich von 360°, so dass sich bereits aus dem ersten Sensorsignal S1 und/oder aus dem zweiten Sensorsignal S2 der absolute Drehwinkel δ des Hauptrotors bzw. der Lenkwelle 10 bestimmen lässt.

Die dritte Sensoreinrichtung SE3 ist hingegen erfindungsgemäß lediglich dazu ausgebildet, den relativen Drehwinkel γ des Hauptrotors 2 in einem definierten Drehwinkelbereich α, dem sogenannten Detektionsbereich α, zu erfassen bzw. das dritte Sensorsignal S3 nur in diesem Drehwinkelbereich α zu erzeugen.

Die Auswerteeinrichtung des erfindungsgemäßen Sensorsystems 1 ist zum einen dazu ausgebildet, den absoluten Drehwinkel δ des Hauptrotors 2 lediglich aus dem von der ersten Sensoreinrichtung SE1 erzeugten ersten Sensorsignal S1 und/oder aus dem von der zweiten Sensoreinrichtung SE2 erzeugten zweiten Sensorsignal S2 zu bestimmen, beispielsweise nach dem Noniusprinzip, wie es etwa in der DE 195 06 938 A1 beschrieben ist, auf das an dieser Stelle ausdrücklich verwiesen wird. Zum anderen ist die Auswerteeinrichtung dazu ausgebildet, den absoluten Drehwinkel δ des Hauptrotors 2 und damit den absoluten Lenkwinkel δ der Lenkwelle 10 aus allen drei Sensorsignalen S1, S2 und S3 zu ermitteln, sofern für den jeweiligen zugehörigen, absoluten Drehwinkel δ des Hauptrotors 2 bzw. der drehsynchron mit diesem verbundenen Lenkwelle 10 das dritten Sensorsignal S3 erzeugt worden ist, insbesondere nach einem in der DE 10 2009 031 176 A1 beschriebenen Verfahren.

Durch die dritte Sensoreinrichtung SE3 lässt sich bei entsprechender Ausgestaltung der dritten Sensoreinrichtung SE3 auf einfache Art und Weise innerhalb des Detektionsbereichs α die Genauigkeit, mit welcher der absolute Drehwinkel δ des Hauptrotors 2 bzw. der absolute Drehwinkel δ der Welle 10 bestimmbar ist, erheblich verbessern. Dies lässt sich besonders einfach mit einer magnetischen, dritten Sensoreinrichtung SE3 erreichen, die wie bei diesem Ausführungsbeispiel eines erfindungsgemäßen Sensorsystems 1 ausgebildet ist und die einen ortsfest innerhalb des Sensorsystems 1 angeordneten Magnetsensor 9 sowie ein am Hauptrotor 2 befestigtes Magnetringsegment 8 aufweist, welches aus mehreren, in Umfangsrichtung aneinandergereihten Permanentmagnet-Polpaaren N-S zusammengesetzt ist, wobei die Polpaare N-S derart aneinandergereiht sind, dass das Magnetringsegment 8 abwechselnd nebeneinander angeordnete Nordpole N und Südpole S aufweist.

Der Magnetsensor 9 ist dabei insbesondere ortsfest gegenüber dem am Hauptrotor 2 angeordneten Magnetringsegment 8 im Sensorsystem 1 befestigt, welches bei einer Drehung der Welle 10 bzw. bei einer Drehung des Hauptrotors 2 um einen ausreichenden Drehwinkel am Magnetsensor 9 vorbeigeführt werden kann. Da in der Umgebung der Magnetpole N, S und damit in der Umgebung eines Polpaares N-S der Feldvektor kontinuierlich seine Richtung ändert, kann die Position zweier nebeneinanderliegender Magnetpole N, S und damit die Position eines Polpaares N-S relativ zu dem Magnetsensor 9 mittels einer Messungen der magnetischen Flussdichte oder mittels der Messung der Feldrichtung erfasst werden. Auf diese Weise kann mittels der dritten Sensoreinrichtung SE3 ein vom relativen Drehwinkel γ des Hauptrotors 2 abhängiges drittes Sensorsignal S3 erzeugt werden.

Die Polpaare N-S erstrecken sich dabei in Umfangsrichtung jeweils über einen gleichen Polpaar-Winkelbereich p, der in diesem Fall in etwa dem 2,5fachen Betrag der Genauigkeit in eine Drehrichtung entspricht, mit welcher der absolute Drehwinkel δ aus dem ersten Sensorsignal S1 und dem zweiten Sensorsignal S2 ermittelt werden kann. Damit lässt sich bereits eine gute Verbesserung der Genauigkeit bei der Ermittlung des absoluten Drehwinkels δ erreichen.

Bei dem beschriebenen Ausführungsbeispiel erstrecken sich die Polpaare N-S jeweils über einen Polpaar-Winkelbereich p von etwa 5°, wob ei der absolute Drehwinkel δ der Lenkwelle 10 nur aus dem ersten Sensorsignal S1 und dem zweiten Sensorsignal S2 mit einer ersten Genauigkeit von etwa ±2° ermittelt werden kann. Zugunsten einer übersichtlichen Darstellung sind die Polpaare N-S in Fig. 1 jedoch jeweils mit einem Polpaar-Winkelbereich von p ≈ 27° dargestellt, nicht mit den tatsächlichen 5°. D ementsprechend weist das beschriebene Ausführungsbeispiel in der Realität 33 Polpaare N-S auf und nicht wie in Fig. 1 schematisch dargestellt lediglich fünfeinhalb Polpaare N-S, denn für einen Detektionsbereich von ±75°, das heißt für einen Detektionsbereich der sich über einen Drehwinkelbereich von insgesamt 150° erstreckt, d.h. es gilt q = 2.4, sind bei einem Polpaar-Winkelbereich von p = 5° insgesamt 33 Polpa are erforderlich und nicht fünfeinhalb.

Die im Ergebnis erreichbare Genauigkeit bzw. die durch die dritte Sensoreinrichtung SE3 erreichbare Verbesserung der Genauigkeit bei der Ermittlung des absoluten Drehwinkels δ hängt dabei zum einen vom Polpaar-Winkelbereich p der Polpaare N-S sowie von der ersten Genauigkeit, mit welcher ein aus dem ersten Sensorsignal S1 und dem zweiten Sensorsignal S2 der absolute Drehwinkel δ der Welle 10 bestimmt werden kann, sowie von der Auflösung des Magnetsensors 9 ab.

Beträgt die erreichbare, erste Genauigkeit, mit der der absolute Drehwinkel δ des Hauptrotors 2 bzw. der Welle 10 nur aus dem ersten Sensorsignal S1 und/oder dem zweiten Sensorsignal S2, ermittelt werden kann, wie in diesem Fall beispielsweise ±2° und erstreckt sich ein Polpaar jeweils über einen Polpaar-Winkelbereich p mit einer Ausdehnung von 5°, kann der absolute Drehwinkel δ der Welle 10 bei entsprechend hoher Auflösung des Magnetsensors 9 mit einer zweiten Genauigkeit von 0,028° bestimmt werden, wobei sich die Genauigkeit des absoluten Drehwinkel δ aus der ersten Genauigkeit in eine Drehrichtung, dividiert durch den Quotienten aus 360° und dem Polpaar-Winkelbereich p ergibt, d.h. für das vorgenannte Zahlenbeispiel gilt: ±δ = 2°/(360°/5°) = 0,02777777778 ≈ 0,028°.

Der Magnetsensor 9 der dritten Sensoreinrichtung SE3 ist bei diesem Ausführungsbeispiel dabei im Bereich der absoluten Nulllage der Lenkwelle 10 bzw. des Hauptrotors 2, insbesondere unmittelbar in der absoluten Nulllage, d.h. bei δ = 0°, ortsfest im Sensorsystem 1 angeordnet, wobei bei diesem Sensorsystem 1 die relative Nulllage des Hauptrotors 2, d.h. γ= 0° mit der absoluten Nulllage, d.h. δ = 0° zusammenfällt. Dadurch kann insbesondere um die Nulllage herum eine besonders hohe Genauigkeit erreicht werden.

Ist der Detektionsbereich α außerdem ausreichend klein gewählt und beispielsweise wie in diesem Ausführungsbeispiel auf einen Drehwinkelbereich von 150° begrenzt, wobei sich der Detektionsbereich insbesondere symmetrisch um die Nulllage erstreckt und in einem Drehwinkelbereich von +75° bis -75° liegt, bezo gen auf den relativen Drehwinkel γ des Hauptrotors 2, kann zumindest während der Erzeugung des dritten Sensorsignals S3, d.h. während der Hauptrotor 2 einen relativen Drehwinkel γ aufweist, der innerhalb des Detektionsbereichs α liegt, ferner eine wechselseitige Beeinflussung zwischen der ersten Sensoreinrichtung SE1 und/oder der zweiten Sensoreinrichtung SE2 und der dritten Sensoreinrichtung SE3 vermieden werden. Dadurch kann eine besonders hohe Genauigkeit bei der Ermittlung des absoluten Drehwinkels δ des Hauptrotors 2 bzw. der Lenkwelle 10 erreicht werden. Insbesondere kann auf diese Weise vermieden werden, dass das dritte Sensorsignal S3 durch die erste Sensoreinrichtung SE1 und/oder die zweite Sensoreinrichtung SE2 verfälscht wird und/oder dass das Magnetringsegment 8 das erste Sensorsignal S1 und/oder das zweite Sensorsignal S2 verfälscht.

Zum besseren Verständnis sind den Fig. 2a und 2b die zugehörigen Signalverläufe der Sensorsignale S1, S2 und S3 dargestellt, wobei die Sensorsignale S1 und S2 dabei über den gesamten absoluten Drehwinkelbereich und damit auch jeweils über eine volle Umdrehung des Hauptrotors 2 erzeugt werden, während das dritte Sensorsignal S3 nur über einen Teilbereich des Drehwinkelbereich des Hauptrotors 2 erzeugt wird.

Erfindungsgemäß wird der absolute Lenkwinkel δ der Lenkwelle 10 mit einem vorbeschriebenen erfindungsgemäßen Sensorsystem 1 ermittelt, indem in einem ersten Schritt die von den Sensoreinrichtungen SE1, SE2, SE3 erzeugten Sensorsignale S1, S2, S3 erfasst werden und in einem zweiten Schritt der absolute Drehwinkel δ des Hauptrotors 2, der dem absoluten Drehwinkel δ der Lenkwelle 10 entspricht, aus den Sensorsignalen S1, S2, S3 ermittelt wird, wobei der absolute Drehwinkel δ aus dem ersten Sensorsignal S1 und/oder dem zweiten Sensorsignal S2 ermittelt wird, wenn der relative Drehwinkel γ des Hauptrotors 2 außerhalb des Detektionsbereichs α der dritten Sensoreinrichtung SE3 liegt, und wobei der absolute Drehwinkel δ aus dem ersten Sensorsignal S1 und /der dem zweiten Sensorsignal S2 und dem dritten Sensorsignal S3 ermittelt wird, wenn der relative Drehwinkel γ des Hauptrotors 2 innerhalb des Detektionsbereichs α liegt.

Bei einer vorteilhaften Durchführung des erfindungsgemäßen Verfahrens wird der absolute Drehwinkel δ des Hauptrotors 2 mit einer ersten Genauigkeit ermittelt, wenn der relative Drehwinkel γ des Hauptrotors 2 außerhalb des Detektionsbereichs α der dritten Sensoreinrichtung SE3 liegt und mit einer zweiten Genauigkeit, vorzugsweise einer besseren Genauigkeit, wenn der relative Drehwinkel γ des Hauptrotors 2 innerhalb des Detektionsbereichs α der dritten Sensoreinrichtung SE3 liegt.

Ferner wird zusätzlich bei einer vorteilhaften Durchführung des erfindungsgemäßen Verfahrens mit einem vorbeschriebenen erfindungsgemäßen Sensorsystem 1 bei der Ermittlung des absoluten Lenkwinkels außerdem eine Plausibilisierung der Sensorsignale S1, S2 und S3 durchgeführt, wobei die Plausibilisierung die Schritte umfasst:
- Ermitteln des absoluten Drehwinkels δ des Hauptrotors 2 mit einer ersten Genauigkeit aus dem ersten Sensorsignal S1 und/oder dem zweiten Sensorsignal S2,
- Prüfen, ob der ermittelte, absolute Drehwinkel δ des Hauptrotors 2 innerhalb oder außerhalb des Detektionsbereichs α liegt,
- Prüfen, ob mittels der dritten Sensoreinrichtung SE3 in Abhängigkeit des zugehörigen, relativen Drehwinkels γ des Hauptrotors 2 das dritte Sensorsignal S3 erzeugt wurde oder nicht,
- Prüfen, ob ein Fehlerzustand vorliegt oder nicht und
- Ausgeben eines Fehlerzustandssignals.

Dabei liegt ein Fehlerzustand vor, falls der ermittelte, absolute Drehwinkel δ des Hauptrotors 2 innerhalb des Detektionsbereichs α der dritten Sensoreinrichtung SE3 liegt und kein drittes Sensorsignal S3 erzeugt worden ist, oder falls der ermittelte, absolute Drehwinkel δ des Hauptrotors 2 außerhalb des Detektionsbereichs α der dritten Sensoreinrichtung SE3 liegt und ein drittes Sensorsignal S3 erzeugt worden ist.

Mit dem vorbeschriebenen erfindungsgemäßen Sensorsystem 1 sowie mit dem vorbeschriebenen erfindungsgemäßen Verfahren kann zwar nur innerhalb eines begrenzten Detektionsbereichs α der absolute Drehwinkel δ einer Welle 10 nahezu hysteresefrei mit einer hohen Auflösung und damit einer hohen Genauigkeit ermittelt werden. Da dies aber in der Regel, insbesondere in Lenksystemen von Fahrzeugen, nur in einem definierten Drehwinkelbereich, insbesondere nur in einem Drehwinkelbereich um die Nulllage herum, erforderlich ist, kann ein erfindungsgemäßes Sensorsystem 1 in vielen Anwendungsfällen ohne nennenswerte Nachteile eingesetzt werden. Demzufolge ist ein erfindungsgemäßes Sensorsystem aufgrund seiner Kostenvorteile, weil die dritte Sensoreinrichtung SE3 nur einen Detektionsbereich kleiner 360° aufweist, gegenüber einem aus dem Stand der Technik bekannten Sensorsystem mit einer dritten Sensoreinrichtung mit einem Detektionsbereich von 360° d.h. einer vollen Umdrehung, vorteilhafter.

Ferner ermöglicht die Beschränkung des Detektionsbereichs α der dritten Sensoreinrichtung SE3 auf einen definierten Drehwinkelbereich α bei einer geschickten Anordnung der einzelnen Sensoreinrichtungen SE1, SE2 und SE3 innerhalb des Sensorsystems 1 zueinander die Reduzierung bzw. in einigen Fällen sogar die vollständige Vermeidung der wechselseitigen Beeinflussung zwischen der ersten Sensoreinrichtung SE1 und/oder der zweiten Sensoreinrichtung SE2 und der dritten Sensoreinrichtung SE3, insbesondere während der Erzeugung des dritten Sensorsignals S3.

Darüber hinaus kann durch die auf den Detektionsbereich α der dritten Sensoreinrichtung SE3 beschränkte Erzeugung des dritten Sensorsignals S3 ein funktionaler Sicherheitsvorteil erreicht werden, da sich auf diese Weise eine zusätzliche Möglichkeit zur Signalplausibilisierung ergibt, insbesondere kann infolgedessen eine verbesserte Diagnosefähigkeit des Sensorsystems erreicht werden.

Je kleiner der Detektionsbereich α der dritten Sensoreinrichtung dabei gewählt ist, desto höher ist der erreichbare Sicherheitsgewinn.

Selbstverständlich ist Vielzahl konstruktiver Abwandlungen zu dem erläuterten Ausführungsbeispiel möglich, ohne den Inhalt der Patentansprüche zu verlassen.

### Bezuaszeichenliste:

- 1: erfindungsgemäßes Sensorsystem
- 2: Hauptrotor
- 3: erster Nebenrotor
- 4: zweiter Nebenrotor
- 8: Magnetringsegment mit Polpaaren
- 9: Magnetsensor
- 10: Welle

- N: magnetischer Nordpol
- p: Polpaar-Winkelbereich
- S: magnetischer Südpol
- S1: erstes Sensorsignal
- S2: zweites Sensorsignal
- S3: drittes Sensorsignal
- SE1: erste Sensoreinrichtung
- SE2: zweite Sensoreinrichtung
- SE3: dritte Sensoreinrichtung

- α: Detektions(winkel)bereich der dritten Sensoreinrichtung
- δ: absoluter Drehwinkel des Hauptrotors
- γ: relativer Drehwinkel des Hauptrotors

## Patentansprüche

1. Sensorsystem (1) zur Ermittlung eines absoluten Drehwinkels (δ) einer Welle (10) mit einem Drehwinkelbereich von mehr als einer Umdrehung, insbesondere zur Ermittlung eines absoluten Lenkwinkels (δ) einer Lenkwelle in einem Fahrzeug mit einem Lenkwinkelbereich von mehr als einer Umdrehung,
wobei das Sensorsystem (1)
- einen drehsynchron mit der Welle (10) verbindbaren Hauptrotor (2),
- einen mechanisch mit einer konstanten und gleichförmigen ersten Übersetzung mit dem Hauptrotor (2) gekoppelten ersten Nebenrotor (3),
- einen mechanisch mit einer von der ersten Übersetzung verschiedenen, konstanten und gleichförmigen zweiten Übersetzung mit dem Hauptrotor (2) gekoppelten zweiten Nebenrotor (4),
- eine dem ersten Nebenrotor (3) zugeordnete erste Sensoreinrichtung (SE1) zur Erzeugung eines von einem Drehwinkel des ersten Nebenrotors (3) abhängigen ersten Sensorsignals (S1),
- eine dem zweiten Nebenrotor (4) zugeordnete zweite Sensoreinrichtung (SE2) zur Erzeugung eines von einem Drehwinkel des zweiten Nebenrotors (4) abhängigen zweiten Sensorsignals (S2),
- eine dem Hauptrotor (2) zugeordnete dritte Sensoreinrichtung (SE3) zur Erzeugung eines von einem relativen Drehwinkel (γ) des Hauptrotors (2) abhängigen dritten Sensorsignals (S3) und
- eine Auswerteeinrichtung zur Ermittlung des absoluten Drehwinkels (δ) des Hauptrotors aus den Sensorsignalen (S1, S2, S3) der Sensoreinrichtungen (SE1, SE2, SE3) aufweist,
**dadurch gekennzeichnet, dass** die dritte Sensoreinrichtung (SE3) einen Detektionsbereich (α) aufweist, der kleiner als 360°ist.

2. Sensorsystem (1) nach Anspruch 1, **dadurch gekennzeichnet, dass** das Sensorsystem (1) dazu ausgebildet ist, den absoluten Drehwinkel (δ) des Hauptrotors (2) mit einer ersten Genauigkeit zu ermitteln, wenn der relative Drehwinkel (γ) des Hauptrotors (2) außerhalb des Detektionsbereichs (α) der dritten Sensoreinrichtung (SE3) liegt, und mit einer zweiten, vorzugsweise besseren Genauigkeit, wenn der relative Drehwinkel (γ) des Hauptrotors (2) innerhalb des Detektionsbereichs (α) der dritten Sensoreinrichtung (SE3) liegt.

3. Sensorsystem (1) nach Anspruch 1 oder 2, **dadurch gekennzeichnet, dass** die dritte Sensoreinrichtung (SE3) derart ausgebildet und relativ zur ersten Sensoreinrichtung (SE1) und/oder zur zweiten Sensoreinrichtung (SE2) angeordnet ist, dass zumindest um einen definierten relativen Drehwinkel (γ) des Hauptrotors (2) herum, vorzugsweise um eine relative Nulllage (γ=0°) des Hauptrotors (2) herum, eine wechselseitige Beeinflussung zwischen der dritten Sensoreinrichtung (SE3) und der ersten Sensoreinrichtung (SE1) und/oder der zweiten Sensoreinrichtung (SE2) vermieden wird, insbesondere während der Erzeugung des dritten Sensorsignals (S3).

4. Sensorsystem (1) nach wenigstens einem der vorgenannten Ansprüche, **dadurch gekennzeichnet, dass** eine absolute Nulllage (δ=0°) des Hauptrotors (2) mit der relativen Nulllage (γ=0°) des Hauptrotors (2) zusammenfällt.

5. Sensorsystem (1) nach wenigstens einem der vorgenannten Ansprüche, **dadurch gekennzeichnet, dass** sich der Detektionsbereich (α) der dritten Sensoreinrichtung (SE3) um einen definierten, relativen Drehwinkel (γ) des Hauptrotors (2) herum erstreckt, vorzugsweise um die relative Nulllage (γ=0°) des Hauptrotors (2) herum, wobei sich der Detektionsbereich (α) insbesondere symmetrisch um den definierten relativen Drehwinkel (γ) des Hauptrotors (2) herum erstreckt.

6. Sensorsystem (1) nach wenigstens einem der vorgenannten Ansprüche, insbesondere nach Anspruch 5, **dadurch gekennzeichnet, dass** der Detektionsbereich (α) der dritten Sensoreinrichtung (SE3) sich über einen Drehwinkelbereich von 180°erstreckt, vorzugsweise von +90°bis -90°bezogen auf den relativen Drehwinkel (γ) des Hauptrotors (2).

7. Sensorsystem (1) nach wenigstens einem der vorgenannten Ansprüche, **dadurch gekennzeichnet, dass** der Detektionsbereich (α) der dritten Sensoreinrichtung (SE3) ≤150°ist und vorzugsweise innerhalb des Drehwinkelbereichs von +75°bis -75°liegt, bezogen auf den relativen Drehwinkel (γ) des Hauptrotors (2).

8. Sensorsystem (1) nach wenigstens einem der vorgenannten Ansprüche, **dadurch gekennzeichnet, dass** die dritte Sensoreinrichtung (SE3) eine magnetische Sensoreinrichtung ist, wobei die dritte Sensoreinrichtung (SE3) zur Erzeugung des dritten Sensorsignals (S3) vorzugsweise einen Magnetsensor (9) sowie ein sich in Umfangsrichtung erstreckendes Magnetringsegment (8) aufweist, wobei ein Winkelbereich (a), über den sich das Magnetringsegment (8) in Umfangsrichtung erstreckt, insbesondere den Detektionsbereich (α) definiert.

9. Sensorsystem (1) nach Anspruch 8, **dadurch gekennzeichnet, dass** der Magnetsensor (9) ortsfest im Sensorsystem (1) angeordnet ist und das Magnetringsegment (8) am Hauptrotor (2), wobei die Komponenten der dritten Sensoreinrichtung (SE3), insbesondere der Magnetsensor (9) und der Magnetsegmentring (8), derart ausgebildet und innerhalb des Sensorsystems (1) angeordnet sind, dass das dritte Sensorsignal (S3) erzeugt wird, wenn der relative Drehwinkel (γ) des Hauptrotors (2) innerhalb des Detektionsbereichs (α) der dritten Sensoreinrichtung (SE3) liegt und kein drittes Sensorsignal (S3) erzeugt wird, wenn der relative Drehwinkel (γ) des Hauptrotors (2) außerhalb des Detektionsbereichs (α) der dritten Sensoreinrichtung (SE3) liegt.

10. Sensorsystem (1) nach Anspruch 8 oder 9, **dadurch gekennzeichnet, dass** das Magnetringsegment (8) aus mehreren, in Umfangsrichtung aneinandergereihten Polpaaren (N, S) zusammengesetzt ist, wobei die Polpaare (N, S) vorzugsweise derart aneinandergereiht sind, dass das Magnetringsegment (8) abwechselnd nebeneinander angeordnete Nordpole (N) und Südpole (S) aufweist.

11. Sensorsystem (1) nach Anspruch 10, **dadurch gekennzeichnet, dass** alle Polpaare (N, S) sich in Umfangsrichtung jeweils über einen gleichen Polpaar-Winkelbereich (p) erstrecken, wobei der Polpaar-Winkelbereich (p) vorzugsweise etwa einer doppelten Genauigkeit entspricht, mit welcher der absolute Drehwinkel (δ) aus dem ersten Sensorsignal (S1) und dem zweiten Sensorsignal (S2) ermittelbar ist.

12. Sensorsystem (1) nach wenigstens einem der Ansprüche 8 bis 11, **dadurch gekennzeichnet, dass** der Magnetsensor (9) der dritten Sensoreinrichtung (SE3) im Bereich der relativen Nulllage (γ) des Hauptrotors (2) ortsfest im Sensorsystem (1) angeordnet ist und der Winkelbereich (α), über den sich das Magnetringsegment (8) der dritten Sensoreinrichtung (SE3) erstreckt und der vorzugsweise den Detektionsbereich (α) definiert, wenigstens so klein gewählt ist, dass eine Beeinflussung der ersten Sensoreinrichtung (SE1) und/oder der zweiten Sensoreinrichtung (SE2) durch das Magnetringsegment (8) der dritten Sensoreinrichtung (SE3) und/oder umgekehrt zumindest um die relative Nulllage (γ=0°) des Hauptrotors (2) herum vermieden wird, vorzugsweise über den gesamten Detektionsbereich (α) der dritten Sensoreinrichtung (SE3).

13. Verfahren zur Ermittlung eines absoluten Drehwinkels (δ) einer Welle (10) mit einem Drehwinkelbereich von mehr als einer Umdrehung, mit einem Sensorsystem (1), insbesondere zur Ermittlung eines absoluten Lenkwinkels (δ) einer Lenkwelle (10) in einem Fahrzeug mit einem Lenkwinkelbereich von mehr als einer Umdrehung, mit einem Sensorsystem (1), das gemäß einem der Ansprüche 1 bis 12 ausgebildet ist, **gekennzeichnet durch** die Schritte:
- Erfassen der von den Sensoreinrichtungen (SE1, SE2, SE3) erzeugten Sensorsignale (S1, S2, S3) und
- Ermitteln des absoluten Drehwinkels (δ) des Hauptrotors (2) aus den erfassten Sensorsignalen (S1, S2, S3), wobei der absolute Drehwinkel (δ) des Hauptrotors (2) aus dem ersten Sensorsignal (S1) und/oder dem zweiten Sensorsignal (S2) ermittelt wird, wenn der relative Drehwinkel (γ) des Hauptrotors (2) außerhalb des Detektionsbereichs (α) der dritten Sensoreinrichtung (SE3) liegt, und wobei der absolute Drehwinkel (δ) aus dem ersten Sensorsignal (S1) und/oder dem zweiten Sensorsignal (S2) und dem dritten Sensorsignal (S3) ermittelt wird, wenn der relative Drehwinkel (γ) des Hauptrotors (2) innerhalb des Detektionsbereichs (α) der dritten Sensoreinrichtung (SE3) liegt.

14. Verfahren nach Anspruch 13, **dadurch gekennzeichnet, dass** der absolute Drehwinkel (δ) des Hauptrotors (2) mit einer ersten Genauigkeit ermittelt wird, wenn der relative Drehwinkel (γ) des Hauptrotors (2) außerhalb des Detektionsbereichs (α) der dritten Sensoreinrichtung (SE3) liegt, und mit einer zweiten Genauigkeit, vorzugsweise besseren Genauigkeit, wenn der relative Drehwinkel (γ) des Hauptrotors (2) innerhalb des Detektionsbereichs (α) der dritten Sensoreinrichtung (SE3) liegt.

15. Verfahren nach Anspruch 13 oder 14, **dadurch gekennzeichnet, dass** zusätzlich eine Plausibilisierung der Sensorsignale (S1, S2, S3) durchgeführt wird, wobei die Plausibilisierung vorzugsweise die Schritte umfasst:
- Ermitteln des absoluten Drehwinkels (δ) des Hauptrotors (2) mit einer ersten Genauigkeit aus dem ersten Sensorsignal (S1) und/oder dem zweiten Sensorsignal (S2),
- Prüfen, ob der absolute Drehwinkel (δ) des Hauptrotors (2) innerhalb oder außerhalb eines definierten Drehwinkelbereichs (α) liegt, wobei der definierte Drehwinkelbereich (a) insbesondere dem Detektionsbereich (α) entspricht,
- Prüfen, ob mittels der dritten Sensoreinrichtung (SE3) in Abhängigkeit des zugehörigen, relativen Drehwinkels (γ) des Hauptrotors (2) das dritte Sensorsignal (S3) erzeugt wurde oder nicht,
- Prüfen, ob ein Fehlerzustand vorliegt oder nicht, und
- ggf. Ausgeben eines Fehlerzustandssignals.

16. Verfahren nach Anspruch 15, **dadurch gekennzeichnet, dass** ein Fehlerzustand vorliegt, falls der ermittelte, absolute Drehwinkel (δ) des Hauptrotors (2) innerhalb des Detektionsbereichs (α) der dritten Sensoreinrichtung (SE3) liegt und kein drittes Sensorsignal (S3) erzeugt worden ist, oder falls der ermittelte, absolute Drehwinkel (δ) des Hauptrotors außerhalb des Detektionsbereichs (α) der dritten Sensoreinrichtung (SE3) liegt und ein drittes Sensorsignal (S3) erzeugt worden ist.

17. Fahrzeug mit einem Sensorsystem (1) zur Ermittlung eines absoluten Drehwinkels (δ) einer Welle (10) mit einem Drehwinkelbereich von mehr als einer Umdrehung, insbesondere zur Ermittlung eines Lenkwinkels (δ) einer Lenkwelle (10) mit einem Lenkwinkelbereich von mehr als einer Umdrehung, **dadurch gekennzeichnet, dass** das Sensorsystem (1) nach wenigstens einem der Ansprüche 1 bis 12 ausgebildet ist, wobei der Hauptrotor (2) drehsynchron mit der Welle (10) verbunden ist, so dass der absolute Drehwinkel (δ) des Hauptrotors (2) dem Drehwinkel der Welle (10) entspricht.

## Claims

1. Sensor system (1) for determining an absolute rotation angle (δ) of a shaft (10) with an angular rotation range of more than one revolution, in particular for determining an absolute steering angle (δ) of a steering shaft in a vehicle with a steering angle of more than one revolution, wherein the sensor system (1) comprises
- a main rotor (2) that can be connected rotationally synchronously with the shaft (10),
- a first auxiliary rotor (3) which is mechanically coupled to the main rotor (2) with a constant and uniform first translation,
- a second auxiliary rotor (4) which is mechanically coupled to the main rotor (2) with a constant and uniform second translation different from the first translation,
- a first sensor device (SE1) which is assigned to the first auxiliary rotor (3) and which is used to generate a first sensor signal (S1) dependent on a rotation angle of the first auxiliary rotor (3),
- a second sensor device (SE2) which is assigned to the second auxiliary rotor (4) and which is used to generate a second sensor signal (S2) dependent on a rotation angle of the second auxiliary rotor (4),
- a third sensor device (SE3) which is assigned to the main rotor (2) and which is used for generating a third sensor signal (S3) dependent on a relative rotation angle (γ) of the main rotor (2), and
- an evaluation device for determining the absolute rotation angle (δ) of the main rotor from the sensor signals (S1, S2, S3) of the sensor devices (SE1, SE2, SE3),
**characterized in that** the third sensor device (SE3) has a detection range (α), which is less than 360°.

2. Sensor system (1) according to Claim 1, **characterized in that** the sensor system (1) is designed to determine the absolute rotation angle (δ) of the main rotor (2) with a first accuracy when the relative rotational angle (γ) of the main rotor (2) is outside the detection range (α) of the third sensor device (SE3), and with a second, preferably better accuracy when the relative rotational angle (γ) of the main rotor (2) is inside the detection range (α) of the third sensor device (SE3).

3. Sensor system (1) according to Claim 1 or 2, **characterized in that** the third sensor device (SE3) is designed and arranged relative to the first sensor device (SE1) and/or the second sensor device (SE2) in such a way that at least around a defined relative rotation angle (γ) of the main rotor (2), preferably around a relative zero position (γ=0°) of the main rotor (2), a mutual influence between the third sensor device (SE3) and the first sensor device (SE1) and/or the second sensor device (SE2) is avoided, in particular during the generation of the third sensor signal (S3).

4. Sensor system (1) according to at least one of the preceding claims, **characterized in that** an absolute zero position (δ=0°) of the main rotor (2) is coincident with the relative zero position (γ=0°) of the main rotor (2).

5. Sensor system (1) according to at least one of the preceding claims, **characterized in that** the detection range (α) of the third sensor device (SE3) extends around a defined, relative rotation angle (γ) of the main rotor (2), preferably around the relative zero position (γ=0°) of the main rotor (2), wherein the detection range (α) extends in particular symmetrically about the defined relative rotation angle (γ) of the main rotor (2).

6. Sensor system (1) according to at least one of the preceding claims, in particular according to Claim 5, **characterized in that** the detection range (α) of the third sensor device (SE3) extends over a rotation angle range of 180°, preferably from +90° to -90° with respect to the relative rotation angle (γ) of the main rotor (2).

7. Sensor system (1) according to at least one of the preceding claims, **characterized in that** the detection range (α) of the third sensor device (SE3) is ≤150° and preferably within the rotation angle range of +75° to -75°, with respect to the relative rotation angle (γ) of the main rotor (2).

8. Sensor system (1) according to at least one of the preceding claims, **characterized in that** the third sensor device (SE3) is a magnetic sensor device, wherein in order to generate the third sensor signal (S3), the third sensor device (SE3) preferably comprises a magnetic sensor (9), and a magnetic ring segment (8) extending in the circumferential direction, wherein an angular range (a), through which the magnetic ring segment (8) extends in the circumferential direction, in particular defines the detection range (α).

9. Sensor system (1) according to Claim 8, **characterized in that** the magnetic sensor (9) is arranged to be stationary in the sensor system (1) and the magnetic ring segment (8) on the main rotor (2), wherein the components of the third sensor device (SE3), in particular the magnetic sensor (9) and the magnetic ring segment (8), are designed and arranged within the sensor system (1) in such a way that the third sensor signal (S3) is generated when the relative rotation angle (γ) of the main rotor (2) is within the detection range (α) of the third sensor device (SE3) and no third sensor signal (S3) is generated when the relative rotation angle (γ) of the main rotor (2) is outside of the detection range (α) of the third sensor device (SE3).

10. Sensor system (1) according to Claim 8 or 9, **characterized in that** the magnetic ring segment (8) is composed of a plurality of pole pairs (N, S) concatenated in the circumferential direction, wherein the pole pairs (N, S) are preferably concatenated in such a way that the magnetic ring segment (8) has north poles (N) and south poles (S) arranged alternately next to each other.

11. Sensor system (1) according to Claim 10, **characterized in that** all pole pairs (N, S) respectively extend in the circumferential direction over an equal pole-pair angular range (p), wherein the pole-pair angular range (p) preferably corresponds approximately to double the accuracy with which the absolute rotation angle (δ) can be determined from the first sensor signal (S1) and the second sensor signal (S2).

12. Sensor system (1) according to at least one of Claims 8 to 11, **characterized in that** the magnetic sensor (9) of the third sensor device (SE3) is arranged in the sensor system (1) in a fixed position in the region of the relative zero position (γ) of the main rotor (2) and the angular range (α), over which the magnetic ring segment (8) of the third sensor device (SE3) extends and which preferably defines the detection range (α), is chosen at least so small that any influence of the first sensor device (SE1) and/or the second sensor device (SE2) due to the magnetic ring segment (8) of the third sensor device (SE3) and/or vice versa, at least about the relative zero position (γ=0°) of the main rotor (2), is prevented, preferably over the entire detection range (α) of the third sensor device (SE3).

13. Method for determining an absolute rotation angle (δ) of a shaft (10) with a rotation angle range of more than one revolution, with a sensor system (1), in particular for determining an absolute steering angle (δ) of a steering shaft (10) in a vehicle with a steering angular range of more than one revolution, having a sensor system (1), which is designed according to any one of Claims 1 to 12, **characterized by** the steps:
- detecting the sensor signals (S1, S2, S3) generated by the sensor devices (SE1, SE2, SE3), and
- determining the absolute angle of rotation (δ) of the main rotor (2) from the detected sensor signals (S1, S2, S3), wherein the absolute rotation angle (δ) of the main rotor (2) is determined from the first sensor signal (S1) and/or the second sensor signal (S2) when the relative rotation angle (γ) of the main rotor (2) is outside of the detection range (α) of the third sensor device (SE3), and wherein the absolute rotation angle (δ) is determined from the first sensor signal (S1) and/or the second sensor signal (S2) and the third sensor signal (S3) when the relative rotation angle (γ) of the main rotor (2) is within the detection range (α) of the third sensor device (SE3).

14. Method according to Claim 13, **characterized in that** the absolute rotation angle (δ) of the main rotor (2) is determined with a first accuracy when the relative rotation angle (γ) of the main rotor (2) is outside the detection range (α) of the third sensor device (SE3), and with a second, preferably better accuracy when the relative rotation angle (γ) of the main rotor (2) is inside the detection range (α) of the third sensor device (SE3).

15. Method according to Claim 13 or 14,
**characterized in that**
in addition, a plausibility check of the sensor signals (S1, S2, S3) is performed, wherein the plausibility check preferably comprises the steps:
- determining the absolute rotation angle (δ) of the main rotor (2) with a first accuracy from the first sensor signal (S1) and/or the second sensor signal (S2),
- testing whether the absolute rotation angle (δ) of the main rotor (2) is inside or outside of a defined rotation angle range (α), wherein the defined rotation angle range (a) corresponds in particular to the detection range (α),
- testing whether or not the third sensor signal (S3) has been generated by means of the third sensor device (SE3) as a function of the associated relative rotation angle (γ) of the main rotor (2),
- testing whether an error condition exists or not, and
- if applicable, outputting an error condition signal.

16. Method according to Claim 15, **characterized in that** an error condition exists if the determined absolute rotation angle (δ) of the main rotor (2) is within the detection range (α) of the third sensor device (SE3) and no third sensor signal (S3) has been generated, or if the determined absolute rotation angle (δ) of the main rotor is outside of the detection range (α) of the third sensor device (SE3) and a third sensor signal (S3) has been generated.

17. Vehicle having a sensor system (1) for determining an absolute rotation angle (δ) of a shaft (10) with a rotation angle range of more than one revolution, in particular for determining a steering angle (δ) of a steering shaft (10) with a steering angle range of more than one revolution, **characterized in that** the sensor system (1) is designed according to at least one of Claims 1 to 12, wherein the main rotor (2) is connected rotationally synchronously to the shaft (10), so that the absolute rotation angle (δ) of the main rotor (2) corresponds to the angle of rotation of the shaft (10).

## Revendications

1. Système de détection (1), destiné à déterminer un angle de rotation absolu (δ) d'un arbre (10) ayant une plage angulaire de rotation de plus d'un tour, notamment destiné à déterminer un angle de rotation absolu (δ) d'un arbre de direction dans un véhicule ayant une plage angulaire de rotation de plus d'un tour,
le système de détection (1) possédant
- un rotor principal (2) pouvant être relié en rotation synchrone avec l'arbre (10),
- un premier rotor auxiliaire (3), couplé mécaniquement avec un premier rapport de démultiplication constant et uniforme avec le rotor principal (2),
- un deuxième rotor auxiliaire (4), couplé mécaniquement avec un deuxième rapport de démultiplication, différent du premier rapport de démultiplication, constant et uniforme avec le rotor principal (2),
- un premier dispositif de détection (SE1) associé au premier rotor auxiliaire (3) et destiné à générer un premier signal de détection (S1) dépendant d'un angle de rotation du premier rotor auxiliaire (3),
- un deuxième dispositif de détection (SE2) associé au deuxième rotor auxiliaire (4) et destiné à générer un deuxième signal de détection (S2) dépendant d'un angle de rotation du deuxième rotor auxiliaire (4),
- un troisième dispositif de détection (SE3) associé au rotor principal (2) et destiné à générer un troisième signal de détection (S3) dépendant d'un angle de rotation relatif (γ) du rotor principal (2) et
- un dispositif d'interprétation destiné à déterminer l'angle de rotation absolu (δ) du rotor principal à partir des signaux de détection (S1, S2, S3) des dispositifs de détection (SE1, SE2, SE3),
**caractérisé en ce que** le troisième dispositif de détection (SE3) possède une plage de détection (α) qui est plus petite que 360°.

2. Système de détection (1) selon la revendication 1, **caractérisé en ce que** le système de détection (1) est configuré pour déterminer l'angle de rotation absolu (δ) du rotor principal (2) avec une première précision lorsque l'angle de rotation relatif (γ) du rotor principal (2) se trouve en-dehors de la plage de détection (α) du troisième dispositif de détection (SE3), et avec une deuxième précision, de préférence meilleure, lorsque l'angle de rotation relatif (γ) du rotor principal (2) se trouve à l'intérieur de la plage de détection (α) du troisième dispositif de détection (SE3).

3. Système de détection (1) selon la revendication 1 ou 2, **caractérisé en ce que** le troisième dispositif de détection (SE3) est configuré et disposé par rapport au premier dispositif de détection (SE1) et/ou au deuxième dispositif de détection (SE2) de telle sorte qu'une influence réciproque entre le troisième dispositif de détection (SE3) et le premier dispositif de détection (SE1) et/ou le deuxième dispositif de détection (SE2) est évitée au moins autour d'un angle de rotation relatif (γ) défini du rotor principal (2), de préférence autour d'une position zéro relative (γ= 0°) du rotor principal (2), notamment pendant la génération du troisième signal de détection (S3).

4. Système de détection (1) selon au moins l'une des revendications précédentes, **caractérisé en ce qu'**une position zéro absolue (δ = 0°) du rotor principal (2) coïncide avec la position zéro relative (γ = 0°) du rotor principal (2) .

5. Système de détection (1) selon au moins l'une des revendications précédentes, **caractérisé en ce que** la plage de détection (α) du troisième dispositif de détection (SE3) s'étend autour d'un angle de rotation relatif (γ) défini du rotor principal (2), de préférence autour de la position zéro relative (γ = 0°) du rotor principal (2), la plage de détection (α) s'étendant notamment symétriquement autour de l'angle de rotation relatif (γ) défini du rotor principal (2) .

6. Système de détection (1) selon au moins l'une des revendications précédentes, notamment selon la revendication 5, **caractérisé en ce que** la plage de détection (α) du troisième dispositif de détection (SE3) s'étend sur une plage angulaire de rotation de 180°, de préférence de +90° à -90° en référence à l'angle de rotation relatif (γ) du rotor principal (2) .

7. Système de détection (1) selon au moins l'une des revendications précédentes, **caractérisé en ce que** la plage de détection (α) du troisième dispositif de détection (SE3) est ≤ 150° et se trouve notamment à l'intérieur de la plage angulaire de rotation de +75° à -75° en référence à l'angle de rotation relatif (γ) du rotor principal (2).

8. Système de détection (1) selon au moins l'une des revendications précédentes, **caractérisé en ce que** le troisième dispositif de détection (SE3) est un dispositif de détection magnétique, le troisième dispositif de détection (SE3) possédant de préférence, pour générer le troisième signal de détection (S3), un détecteur magnétique (9) ainsi qu'un segment d'anneau magnétique (8) qui s'étend dans la direction circonférentielle, une plage angulaire (a) sur laquelle le segment d'anneau magnétique (8) s'étend dans la direction circonférentielle définissant notamment la plage de détection (α).

9. Système de détection (1) selon la revendication 8, **caractérisé en ce que** le détecteur magnétique (9) est monté en position fixe dans le système de détection (1) et le segment d'anneau magnétique (8) sur le rotor principal (2), les composants du troisième dispositif de détection (SE3), notamment le détecteur magnétique (9) et le segment d'anneau magnétique (8) étant configurés et disposés à l'intérieur du système de détection (1) de telle sorte que le troisième signal de détection (S3) est généré lorsque l'angle de rotation relatif (γ) du rotor principal (2) se trouve à l'intérieur de la plage de détection (α) du troisième dispositif de détection (SE3) et aucun troisième signal de détection (S3) n'est généré lorsque l'angle de rotation relatif (γ) du rotor principal (2) se trouve en-dehors de la plage de détection (α) du troisième dispositif de détection (SE3).

10. Système de détection (1) selon la revendication 8 ou 9, **caractérisé en ce que** le segment d'anneau magnétique (8) est constitué de plusieurs paires de pôles (N, S) juxtaposées dans la direction circonférentielle, les paires de pôles (N, S) étant de préférence juxtaposées de telle sorte que le segment d'anneau magnétique (8) présente un des pôles nord (N) et des pôles sud (S) disposés en alternance les uns à côté des autres.

11. Système de détection (1) selon la revendication 10, **caractérisé en ce que** les paires de pôles (N, S) s'étendent dans la direction circonférentielle respectivement au-dessus d'une même plage angulaire de paire de pôles (p), la plage angulaire de paire de pôles (p) correspondant de préférence approximativement à une double précision avec laquelle l'angle de rotation absolu (δ) peut être déterminé à partir du premier dispositif de détection (S1) et du deuxième dispositif de détection (S2) .

12. Système de détection (1) selon au moins l'une des revendications 8 à 11, **caractérisé en ce que** le détecteur magnétique (9) du troisième dispositif de détection (SE3) est disposé dans la zone de la position zéro relative (γ) du rotor principal (2) en position fixe dans le système de détection (1) et la plage angulaire (α), sur laquelle s'étend le segment d'anneau magnétique (8) du troisième dispositif de détection (SE3) et qui définit de préférence la plage de détection (α), est de préférence choisie petite au point qu'une influence du premier dispositif de détection (SE1) et/ou du deuxième dispositif de détection (SE2) par le segment d'anneau magnétique (8) du troisième dispositif de détection (SE3) et/ou inversement autour de la position zéro relative (γ = 0°) du rotor principal (2) est évitée, de préférence sur la totalité de la plage de détection (α) du troisième dispositif de détection (SE3).

13. Procédé de détermination d'un angle de rotation absolu (δ) d'un arbre (10) ayant une plage angulaire de rotation de plus d'un tour, comprenant
un système de détection (1), notamment destiné à déterminer un angle de rotation absolu (δ) d'un arbre de direction (10) dans un véhicule ayant une plage angulaire de rotation de plus d'un tour, avec un système de détection (1) qui est configuré selon l'une des revendications 1 à 12, **caractérisé par** les étapes suivantes :
- acquisition de signaux de détection (S1, S2, S3) générés par les dispositifs de détection (SE1, SE2, SE3) et
- détermination de l'angle de rotation absolu (δ) du rotor principal (2) à partir des signaux de détection (S1, S2, S3), l'angle de rotation absolu (δ) du rotor principal (2) étant déterminé à partir du premier signal de détection (S1) et/ou du deuxième signal de détection (S2) lorsque l'angle de rotation relatif (γ) du rotor principal (2) se trouve en-dehors de la plage de détection (α) du troisième dispositif de détection (SE3), et l'angle de rotation absolu (δ) étant déterminé à partir du premier signal de détection (S1) et/ou du deuxième signal de détection (S2) et du troisième signal de détection (S3) lorsque l'angle de rotation relatif (γ) du rotor principal (2) se trouve à l'intérieur de la plage de détection (α) du troisième dispositif de détection (SE3) .

14. Procédé selon la revendication 13, **caractérisé en ce que** l'angle de rotation absolu (δ) du rotor principal (2) est déterminé avec une première précision lorsque l'angle de rotation relatif (γ) du rotor principal (2) se trouve en-dehors de la plage de détection (α) du troisième dispositif de détection (SE3), et avec une deuxième précision, de préférence meilleure, lorsque l'angle de rotation relatif (γ) du rotor principal (2) se trouve à l'intérieur de la plage de détection (α) du troisième dispositif de détection (SE3).

15. Procédé selon la revendication 13 ou 14, **caractérisé en ce qu'**une vérification de la plausibilité des signaux de détection (S1, S2, S3) est en plus effectuée, la vérification de la plausibilité comprenant de préférence les étapes suivantes :
- détermination de l'angle de rotation absolu (δ) du rotor principal (2) avec une première précision à partir du premier signal de détection (S1) et/ou du deuxième signal de détection (S2),
- vérification si l'angle de rotation absolu (δ) du rotor principal (2) se trouve à l'intérieur ou en-dehors d'une plage angulaire de rotation (α) définie, la plage angulaire de rotation (a) définie correspondant notamment à la plage de détection (α),
- vérification si le troisième signal de détection (S3) a été généré ou non au moyen du troisième dispositif de détection (SE3) en fonction de l'angle de rotation relatif (γ) associé du rotor principal (2),
- vérification s'il y a ou non présence d'un état de défaut et
- le cas échéant, délivrance d'un signal d'état de défaut.

16. Procédé selon la revendication 15, **caractérisé en ce qu'**un état de défaut est présent dans le cas où l'angle de rotation absolu (δ) déterminé du rotor principal (2) se trouve à l'intérieur de la plage de détection (α) du troisième dispositif de détection (SE3) et aucun troisième signal de détection (S3) n'a été généré, ou dans le cas où l'angle de rotation absolu (δ) déterminé du rotor principal se trouve en-dehors de la plage de détection (α) du troisième dispositif de détection (SE3) et un troisième signal de détection (S3) a été généré.

17. Véhicule équipé d'un système de détection (1), destiné à déterminer un angle de rotation absolu (δ) d'un arbre (10) ayant une plage angulaire de rotation de plus d'un tour, notamment destiné à déterminer un angle de rotation (δ) d'un arbre de direction (10) ayant une plage angulaire de rotation de plus d'un tour, **caractérisé en ce que** le système de détection (1) est configuré selon au moins l'une des revendications 1 à 12, le rotor principal (2) étant relié en rotation synchrone avec l'arbre (10), de sorte que l'angle de rotation absolu (δ) du rotor principal (2) correspond à l'angle de rotation de l'arbre (10).
